# EUROPÄISCHE PATENTSCHRIFT

(11) **EP 1 451 125 B1**
(45) Veröffentlichungstag und Bekanntmachung des Hinweises auf die Patenterteilung: **25.05.2005**
(21) Anmeldenummer: 02788459.2
(22) Anmeldetag: 05.12.2002
(51) Int. Cl.: C04B 18/10

(54) **VERFAHREN ZUR INTEGRIERTEN HERSTELLUNG VON PUTZEN UND MÖRTEL SOWIE VON KIESERSATZ**
METHOD FOR THE INTEGRATED PRODUCTION OF CASTS AND MORTARS AND OF GRAVEL SUBSTITUTE
PROCEDE DE FABRICATION INTEGREE DE CREPI ET DE MORTIER AINSI QUE DE GRAVILLONS DE SUBSTITUTION

(30) Priorität: 05.12.2001 AT 9312001
(43) Veröffentlichungstag der Anmeldung: 01.09.2004
(73) Patentinhaber: Maruhn, Eckehard, 20095 Hamburg (DE)
(72) Erfinder: Maruhn, Eckehard, 20095 Hamburg (DE)
(74) Vertreter: Hiebsch, Gerhard F., Dipl.-Ing.
(86) Internationale Anmeldenummer: PCT/IB2002/005747
(87) Internationale Veröffentlichungsnummer: WO 2003/048068

(56) Entgegenhaltungen:
- EP-A- 0 582 008
- WO-A-89/12498
- WO-A-98/14410
- CH-A- 676 116
- DE-A- 3 441 244
- DE-A- 3 444 686
- DE-A- 4 011 764
- DE-A- 19 522 704
- FR-A- 2 807 030
- GB-A- 409 530
- US-A- 4 242 142

## Beschreibung

Die Erfindung bezieht sich auf ein Verfahren zur integrierten Herstellung von Putzen und Mörtel sowie von Kiesersatz auf der Basis von hydraulischen Bindemitteln gemäß dem Oberbegriff von Anspruch 1 sowie auf Putze und Mörtel sowie auf Kiesersatz auf der Basis von hydraulischen Bindemitteln gemäß der Ansprüche 7 und 9.

Dabei wird als Ausgangsstoff Schlacke aus Müllverbrennungsanlagen (MVA) sowie Stahlwerks- und Hüttenschlacke verwendet. Es handelt sich dabei um die festen, nicht brennbaren Reststoffe, die im Zuge der Verbrennung in Industriefeuerungen oder MVA anfallen.

Bei der Müllverbrennung macht Schlacke noch etwa 35% des ursprünglichen Müllgewichtes aus. Typischer Hausmüll enthält in Gewichtsprozent meist 59-69% Siliziumoxid, 4.9-7.8% Eisenoxid, 5.1-6.3% Aluminiumoxid und 8.3-10.3% Kalk und eignet sich daher zur Herstellung eines anorganischen, hydraulischen Bindemittels für betonartig erhärtende Massen, Putze und Mörtel. Neben den eisenhaltigen Anteilen enthält Müllverbrennungsschlacke auch wesentlich geringere Anteile an Nichteisen-Metallen wie Kupfer, Nickel, Blei, Zink oder Zinn in variierenden Mengen.

Eisenhüttenschlacken können in Hochofenschlacken und Stahlwerksschlacken gegliedert werden, wobei Hochofenschlacken bei der Produktion von Roheisen im Hochofen und Stahlwerksschlacken bei der Stahlerzeugung in Konvertern, in Elektroöfen sowie Siemens-Martin-Öfen anfallen. Metallhüttenschlacken werden bei der Gewinnung von Nichteisen (NE)-Metallen gebildet. Nach dem derzeitigen Stand der Technik entstehen pro Tonne Roheisen ca. 250 kg Hochofenschlacke und pro Tonne Rohstahl ca. 120 kg Stahlwerksschlacke. Somit ergeben sich große Mengen an Schlacke, die einer Wiederverwertung zugeführt werden könnten. Hochofenschlacke wird im wesentlichen als Splitt und Schotter im Straßen- und Wegebau verwendet. Stahlwerksschlacken finden besonders im Bereich des Bauwesens, insbesondere im Straßen-, Wege- und Wasserbau, Verwendung.

Hochofen- und Stahlwerksschlacke unterscheiden sich zwar hinsichtlich ihrer chemischen Zusammensetzung, aufgrund ihrer Hauptbestandteile Kalziumoxid, Siliziumdioxid, Aluminiumoxid und Eisenoxid eignen sie sich aber beide ebenfalls zur Herstellung hydraulischer Bindemittel.

Andererseits hat sich gezeigt, dass sich Schlacke aus Müllverbrennungsanlagen sowie Stahlwerks- und Hüttenschlacke auch als Ausgangsmaterial zur Erzeugung von Putzen und Mörtel sowie als Grundkörper von Kiesersatz eignen. Ziel der Erfindung ist es daher, diese Eigenschaften von Schlacke in einem integrierten Verfahren so zu nutzen, dass Schlacke aus Müllverbrennungsanlagen sowie Stahlwerks- und Hüttenschlacke zur Herstellung von hydraulischen Bindemitteln verwendet wird und in weiterer Folge hydraulische Bindemittel zur weiteren Behandlung der Schlacke herangezogen werden, um letztendlich nicht nur Putze und Mörtel sondern auch Kiesersatz zu erzeugen.

Das wird durch die kennzeichnenden Merkmale von Anspruch 1 erreicht. Anspruch 1 sieht dabei vor, in einem ersten Verfahrensschritt Schlacke in eine erste und eine zweite Fraktion mit unterschiedlicher mittlerer Korngröße zu teilen, wobei die erste Fraktion mit größerer mittleren Korngröße zerkleinert und wieder der Schlacke zugeführt wird, und von der zweiten Fraktion mit kleinerer mittleren Korngröße eisenhaltige Anteile sowie wahlweise Kunststoffe und Papier entfernt werden. In einem zweiten Verfahrensschritt wird die zweite Fraktion in einen Feinstanteil mit kleinster mittlerer Korngröße und einem Kiesanteil mit größerer mittleren Korngröße unterteilt, wobei der Feinstanteil nach wahlweiser Abscheidung von Nichteisen-Metallen zur Herstellung von hydraulischen Bindemitteln verwendet wird. In einem dritten Verfahrensschritt werden diese hydraulischen Bindemittel schließlich mit dem Feinstanteil, Gerüstsilikaten und wahlweise aluminiumhältigen Anteilen zur Herstellung von Putzen und Mörtel verwendet, sowie mit dem Kiesanteil nach wahlweiser Abscheidung von Nichteisen-Metallen zur Herstellung von Kiesersatz.

Die Ansprüche 2 und 3 beziehen sich auf mögliche Ausführungsformen des erfindungsgemäßen Verfahrens. Die Ansprüche 4 und 5 betreffen eine vorteilhafte Wahl der mittleren Korngrößen .der erzeugten Fraktionen. Anspruch 6. nennt eine vorteilhafte Erzeugungsvariante von Kiesersatz auf Basis von Schlacke und hydraulischen Bindemitteln.

Die kennzeichnenden Merkmale der Ansprüche 7 und 8 schlagen Putze und Mörtel vor, wie sie mit dem erfindungsgemäßen Verfahren gewonnen werden können.

Die kennzeichnenden Merkmale der Ansprüche 9 bis 12 schlagen einen Kiesersatz vor, wie er mit dem erfindungsgemäßen Verfahren hergestellt werden kann.

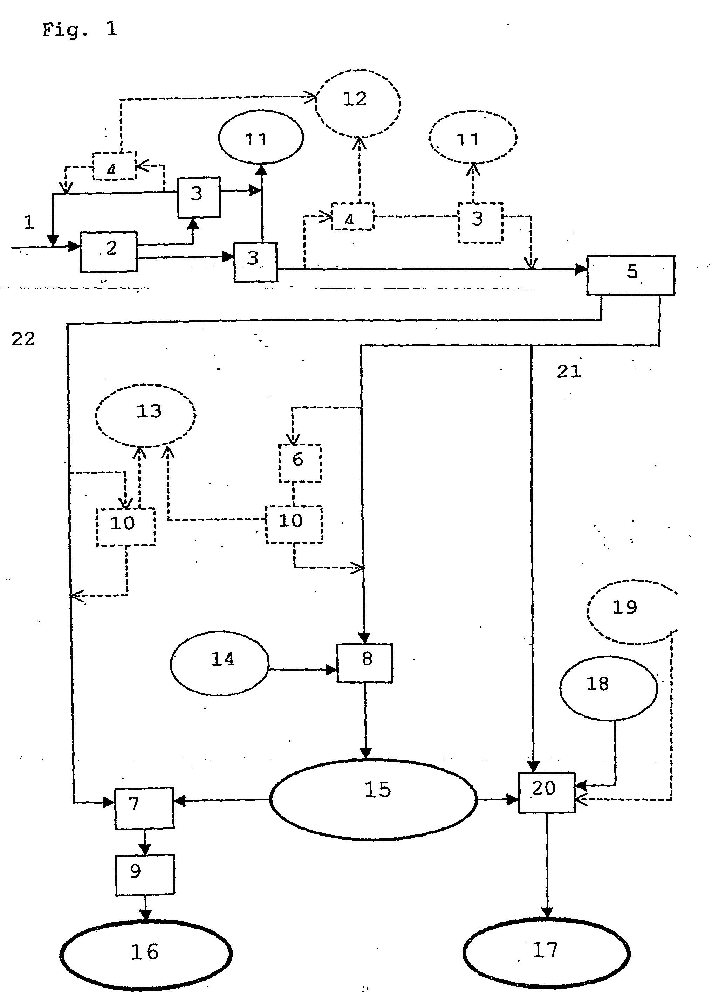

Die Erfindung wird im folgenden anhand der Figur 1 näher erläutert. Durchgezogene Linien zeigen den obligaten Verfahrensweg an, die durch strichlierte Linien gekennzeichneten Verfahrensschritte sind optional, erweisen sich aber im wesentlichen bei Verwendurigw von Müllverbrennungsschlacke als vorteilhaft. Rechteckige Symbole stehen für Vorrichtungen, während runde Symbole die Ab- oder Zuführung von Stoffen bezeichnen.

Schlacke 1 aus Müllverbrennungsanlagen (MVA) oder Stahlwerks- oder Hüttenschlacke wird einer Siebanlage 2 zugeführt. Dabei erfolgt eine Trennung in eine erste Fraktion mit Korngrößen von über 32 mm sowie eine zweite Fraktion mit Korngrößen unter 32 mm. Die erste Fraktion wird zu einem Separator 4 transportiert, wobei sie einen Magnetabscheider 3 zur Abscheidung von eisenhältigen Anteilen 11 durchläuft. Der Separator 4 ist wahlweise mit einem Gebläse zur Abscheidung von Kunststoff und Papier 12 ausgestattet, was bei der Verwendung von MVA-Schlacke vorteilhaft sein kann. Die erste Fraktion wird nach Durchlaufen des Magnetabscheiders 3 sowie des Separators 4 zerkleinert (in Fig. 1 nicht explizit dargestellt) und wieder der Siebanlage 2 rückgeführt.

Die zweite Fraktion mit Korngrößen unter 32 mm wird ebenfalls zu einem Magnetabscheider 3 transportiert, wo eisenhaltige Anteile 11 ausgesondert werden. Bevor diese zweite Fraktion in einer weiteren Siebanlage 5 behandelt wird, kann sie wahlweise einem weiteren Separator 4 zur Abscheidung von Kunststoff und Papier 12 sowie einem Magnetabscheider 3 zur Absonderung von eisenhaltigen Anteilen 11 zugeführt werden.

In der Siebanlage 5 wird eine weitere Auftrennung der Schlacke in einen Feinstanteil 21 mit Korngrößen unter 4 mm sowie in einen Kiesanteil 22 mit Korngrößen zwischen 4 und 32 mm vorgenommen. Der Feinstanteil 21 wird zu einer Impulsdrallmühle 8 transportiert, wobei er zuvor wahlweise in einer Quetschmühle 6 und einem NE-Metallabscheider 10 behandelt werden kann. In der Quetschmühle 10 wird der Feinstanteil 21 auf Korngrößen unter 1 mm zerkleinert. Im NE-Metallabscheider 10 werden NE-Metalle 13 wie Kupfer oder Aluminium abgeschieden.

Dem Feinstanteil 21 werden in der Impulsdrallmühle 8 geeignete Zusatzstoffe 14 beigegeben und zu hydraulischen Bindemitteln 15 vermischt und vermahlen. Es handelt sich dabei um keramische Bindesysteme, die Zement sehr ähnlich sind. Je nach Prozessführung können Bindemittel 15 mit unterschiedlicher Zusammensetzung erzeugt werden.

Ein weiterer Teil der Feinstfraktion 21 kann im Anlagenabschnitt 20 mit hydraulischem Bindemittel 15 sowie Gerüstsilikaten 18 vorzugsweise in einem Mischungsverhältnis von 60% Schlacke 1, 35% Bindemittel 15 und 5% Gerüstsilikate 18 vermengt werden. Somit können Putze und Mörtel 17 mit hervorragenden Eigenschaften hergestellt werden. Wahlweise kann unter entsprechender Reduktion der Schlackenmenge feines Aluminiumpulver 19 mit Korngrößen unter 0.06 mm beigefügt werden, um so etwa Thermoisolierputz zu erzeugen. Es haben sich dabei Mengen von 5% des Aluminiumpulvers als vorteilhaft erwiesen.

Der Kiesanteil 22 kann ebenfalls wahlweise einem NE-Metallabscheider 10 zugeführt werden, wobei wiederum NE-Metalle 13 ausgesondert werden. In einer Coatierung 7, die etwa als Coatierungstrommel ausgebildet sein kann, werden die Schlackekörner mithilfe einer Suspension eines hydraulischen Bindemittels 15 beschichtet. Nach der Trocknung 9 ist das Kiesersatzprodukt fertiggestellt.

Es ergibt sich somit ein Verfahren das sich dazu eignet, Putze und Mörtel sowie Kiesersatz-Produkte auf der Basis von Schlacke als auch auf der Basis von hydraulischen Bindemitteln, die wiederum aus Schlacke gewonnen werden können, zu erzeugen. Es zeichnet sich insbesondere auch dadurch aus, dass sowohl Müllverbrennungsschlacke als auch Stahlwerks- und Hüttenschlacke als auch Mischungen davon verwendet werden können, sofern die in Fig. 1 strichliert angezeigten Verfahrensschritte miteinbezogen werden.

## Patentansprüche

1. Verfahren zur integrierten Herstellung von Putzen und Mörtel (17) auf der Basis von hydraulischen Bindemitteln (15) sowie von Kiesersatz (16), **dadurch gekennzeichnet, dass** in einem ersten Verfahrensschritt Schlacke (1) in eine erste und eine zweite Fraktion mit unterschiedlicher mittlerer Korngröße geteilt wird, wobei die erste Fraktion mit größerer mittleren Korngröße zerkleinert und wieder der Schlacke (1) zugeführt wird, und von der zweiten Fraktion mit kleinerer mittleren Korngröße eisenhaltige Anteile (11) sowie wahlweise Kunststoffe und Papier (12) entfernt werden, in einem zweiten Verfahrensschritt die zweite Fraktion in einen Feinstanteil (21) mit kleinster mittlerer Korngröße und einem Kiesanteil (22) mit größerer mittleren Korngröße unterteilt wird, wobei der Feinstanteil (21) nach wahlweiser Abscheidung von Nichteisen-Metallen (13) zur Herstellung von hydraulischen Bindemitteln (15) verwendet wird, und in einem dritten Verfahrensschritt hydraulische Bindemittel (15) mit dem Feinstanteil (21), Gerüstsilikaten (18) und wahlweise aluminiumhältigen Anteilen (19) zur Herstellung von Putzen und Mörtel (17) verwendet werden, sowie hydraulische Bindemittel (15) mit dem Kiesanteil (22) nach wahlweiser Abscheidung von Nichteisen-Metallen (13) zur Herstellung von Kiesersatz (16) verwendet werden.

2. Verfahren nach Anspruch 1, **dadurch gekennzeichnet, dass** die Schlacke (1) aus Müllverbrennungsanlagen stammt.

3. Verfahren nach Anspruch 1, **dadurch gekennzeichnet, dass** es sich bei der Schlacke (1) um Stahlwerks- oder Hüttenschlacke handelt.

4. Verfahren nach einem der Ansprüche 1 bis 3, **dadurch gekennzeichnet, dass** die Korngrößen der ersten Fraktion über 32 mm und jene der zweiten Fraktion unter 32 mm betragen.

5. Verfahren nach einem der Ansprüche 1 bis 4, **dadurch gekennzeichnet, dass** die Korngrößen des Feinstanteiles (21) unter 4 mm und jene des Kiesanteiles (22) über 4 mm betragen.

6. Verfahren nach einem der Ansprüche 1 bis 5, **dadurch gekennzeichnet, dass** die Herstellung des Kiesersatzes (16) über Beschichtung des Kiesanteiles (22) mit hydraulischen Bindemitteln (15) erfolgt.

7. Putze und Mörtel auf der Basis von hydraulischen Bindemitteln (15), **dadurch gekennzeichnet, dass** sie
55%-65% , vorzugsweise 60%, Müllverbrennungsschlacke, Hüttenschlacke und Stahlwerksschlacke (1) in beliebigen Mischungsverhältnissen aber mit Korngrößen unter 4 mm,
30%-40%, vorzugsweise 35%, hydraulisches Bindemittel (15), und
4%-6%, vorzugsweise 5%, Gerüstsilikate (18), sowie wahlweise
3% Aluminiumpulver (19) mit Korngrößen unter 0.06 mm enthalten.

8. Putze und Mörtel auf der Basis von hydraulischen Bindemitteln (15) nach Anspruch 7, **dadurch gekennzeichnet, dass** das hydraulische Bindemittel (15) auf Basis von Schlacke (1) aus Müllverbrennungsanlagen, Stahlwerksschlacke oder Hüttenschlacke hergestellt ist.

9. Kiesersatz, dessen Körner aus einem Grundkörper aus Schlacke (1) bestehen, **dadurch gekennzeichnet, dass** der Grundkörper mithilfe eines hydraulischen Bindemittels (15) beschichtet wird, das auf Basis von Schlacke (1) aus Müllverbrennungsanlagen, Stahlwerksschlacke oder Hüttenschlacke hergestellt wurde.

10. Kiesersatz nach Anspruch 9, **dadurch gekennzeichnet, dass** dessen Körnung zwischen 4 mm und 32 mm liegt.

11. Kiesersatz nach Anspruch 9 oder 10, **dadurch gekennzeichnet, dass** die Schlacke (1) aus Müllverbrennungsanlagen stammt, oder Stahlwerks- oder Hüttenschlacke ist.

## Claims

1. Process for the integrated production of plasters and mortars (17) based on hydraulic binders (15) and gravel replacement (16), **characterised in that** in a first process step, slag (1) is divided into a first and a second fraction having different average grain size, wherein the first fraction having greater average grain size is comminuted and returned to the slag (1), and iron-containing portions (11) and optionally plastics and paper (12) are removed from the second fraction having smaller average grain size, in a second process step, the second fraction is sub-divided into superfines (21) having the smallest average grain size and a gravel portion (22) having a greater average grain size, wherein the superfines (21) are used, after optional separation of non-iron metals (13), for the production of hydraulic binders (15), and in a third process step, hydraulic binders (15) with the superfines (21), tectosilicates (18) and optionally aluminium-containing portions (19), are used for the production of plasters andfmortars (17), and hydraulic binders (15) with the gravel portion (22), after optional separation of non-iron metals (13), are used for the production of gravel replacement (16).

2. Process according to claim 1, **characterised in that** the slag (1) originates from waste incineration plants.

3. Process according to claim 1, **characterised in that** the slag (1) is steelworks slag or metallurgical slag.

4. Process according to one of claims 1 to 3, **characterised in that** the grain sizes of the first fraction are above 32 mm and those of the second fraction below 32 mm.

5. Process according to one of claims 1 to 4, **characterised in that** the grain sizes of the superfines (21) are below 4 mm and those of the gravel portion (22) above 4 mm.

6. Process according to one of claims 1 to 5, **characterised in that** the production of gravel replacement (16) takes place via coating of the gravel portion (22) with hydraulic binders (15).

7. Plasters and mortars based on hydraulic binders (15), **characterised in that** they contain 55%-65%, preferably 60%, of waste incineration slag, metallurgical slag and steelworks slag (1) in any mixing ratios but having grain sizes below 4 mm, 30%-40%, preferably 35%, of hydraulic binder (15), and 4%-6%, preferably 5%, of tectosilicates (18), and optionally 3% aluminium powder (19) having grain sizes below 0.06 mm.

8. Plasters and mortars based on hydraulic binders (15) according to claim 7, **characterised in that** the hydraulic binder (15) based on slag (1) is produced from waste incineration plants, steelworks slag or metallurgical slag.

9. Gravel replacement, the grains of which consist of a parent substance made from slag (1), **characterised in that** the parent substance is coated with the aid of a hydraulic binder (15), which has been produced on the basis of slag (1) from waste incineration plants, steelworks slag or metallurgical slag.

10. Gravel replacement according to claim 9, **characterised in that** its range of grain sizes lies between 4 mm and 32 mm.

11. Gravel replacement according to claim 9 or 10, **characterised in that** the slag (1) originates from waste incineration plants, or is steelworks slag or metallurgical slag.

## Revendications

1. Procédé pour la fabrication intégrée de crépis et de mortiers (17) à base de liants hydrauliques (15) ainsi que de substitut de gravier (16), **caractérisé en ce que**, dans une première étape du procédé, le laitier (1) est divisé en une première et une deuxième fraction, présentant une granulométrie moyenne différente, la première fraction présentant une granulométrie moyenne plus élevée, étant concassée et ramenée au laitier (1), et les portions contenant du fer (11) ainsi que, facultativement, les matières plastiques et le papier (12) étant enlevés de la deuxième fraction présentant une granulométrie moyenne moins élevée, **en ce que** dans une deuxième étape du procédé, la deuxième fraction est subdivisées en une portion fine (21) présentant la granulométrie moyenne la moins élevée et une portion de gravier (22) présentant la granulométrie moyenne la plus élevée, la portion fine (21) étant utilisée pour la fabrication de liants hydrauliques (15) après séparation facultative des métaux non ferreux (13), et **en ce que**, dans une troisième étape du procédé, les liants hydrauliques (15) contenant la portion fine (21), des tectosilicates (18) et facultativement des portions contenant de l'aluminium (19) sont utilisés pour la fabrication de crépis et de mortiers (17), de même que les liants hydrauliques (15) contenant la portion de gravier (22) sont utilisés pour la fabrication de substitut de gravier (16) après séparation facultative des métaux non ferreux (13).

2. Procédé selon la revendication 1, **caractérisé en ce que** le laitier (1) provient d'une usine d'incinération d'ordures ménagères.

3. Procédé selon la revendication 1, **caractérisé en ce que** le laitier (1) est du laitier de sidérurgie ou de fonderie.

4. Procédé selon une des revendications 1 à 3, **caractérisé en ce que** la granulométrie de la première fraction est supérieure à 32 mm, et celle de la deuxième fraction est inférieure à 32 mm.

5. Procédé selon une des revendications 1 à 4, **caractérisé en ce que** la granulométrie de la portion fine (21) est inférieure 4 mm, et celle de la portion de gravier (22) est supérieure à 4 mm.

6. Procédé selon une des revendications 1 à 5, **caractérisé en ce que** la fabrication de substitut de gravier (16) se fait par enrobage de la portion de gravier (22) avec les liants hydrauliques (15).

7. Crépi et mortier à base de liants hydrauliques (15), **caractérisés en ce qu'**ils contiennent 55% à 65 %, de préférence 60 %, de laitier d'incinération des ordures ménagères, de laitier de fonderie et de laitier de sidérurgie (1) dans des rapports de mélange quelconques, mais présentant une granulométrie inférieure à 4 mm, 30 % à 40 %, de préférence 35 %, de liants hydrauliques (15), et 4 % à 6 %, de préférence 5 %, de tectosilicates (18), ainsi que facultativement 3 % de poudre d'aluminium (19) d'une granulométrie inférieure à 0,06 mm.

8. Crépi et mortier à base de liants hydrauliques (15) selon la revendication 7, **caractérisés en ce que** le liant hydraulique (15) est fabriqué à base de laitier (1) provenant d'usines d'incinération des ordures ménagères, de laitier de sidérurgie ou de laitier de fonderie.

9. Substitut de gravier dont les grains sont constitués d'un corps de base en laitier (1), **caractérisé en ce que** le corps de base est enrobé au moyen d'un liant hydraulique (15) qui a été fabriqué à base de laitier (1) provenant d'usines d'incinération des ordures ménagères, de laitier de sidérurgie ou de laitier de fonderie.

10. Substitut de gravier selon la revendication 9, **caractérisé en ce que** sa granulométrie se situe entre 4 mm et 32 mm.

11. Substitut de gravier selon la revendication 9 ou 10, **caractérisé en ce que** le laitier (1) provient d'usines d'incinération des ordures ménagère, ou est du laitier de sidérurgie ou de fonderie.
